# EUROPEAN PATENT SPECIFICATION

(11) **EP 1 981 358 B1**
(45) Date of publication and mention of the grant of the patent: **28.07.2010**
(21) Application number: 07704233.1
(22) Date of filing: 30.01.2007
(51) Int. Cl.: A23L 1/29

(54) **NUTRITIONAL COMPOSITION FOR LOW BIRTH WEIGHT INFANTS**
NÄHRSTOFFZUSAMMENSETZUNG FÜR SÄUGLINGE MIT NIEDRIGEM GEBURTSGEWICHT
PRÉPARATION NUTRITIONNELLE POUR NOURRISSONS PRÉSENTANT UN POIDS FAIBLE À LA NAISSANCE

(30) Priority: 31.01.2006 EP 06101078
(43) Date of publication of application: 22.10.2008
(73) Proprietor: Nestec S.A., 1800 Vevey (CH)
(72) Inventor: HASCHKE, Ferdinand, CH-1814 La Tour De Peilz (CH); MAGLIOLA, Corinne Renée, CH-1009 Pully (CH)
(74) Representative: Corticchiato, Olivier
(86) International application number: PCT/EP2007/050881
(87) International publication number: WO 2007/088160

(56) References cited:
- EP-A- 0 756 827
- EP-A- 0 764 405
- US-A- 4 216 236
- US-A- 5 411 751
- US-A- 5 635 199

## Description

### Field of the Invention

This invention relates to a nutritional composition for very low birth weight premature infants and to a method for meeting the nutritional requirements of such infants.

### Background to the Invention

Mother's milk is recommended for all infants. However, in some cases particularly in the case of infants born prematurely, breast feeding may be inadequate or unsuccessful or inadvisable for medical reasons or even impossible. Infant formulas have been developed for these situations.

Premature infants are infants born before completion of the 37^{th} week of pregnancy. Such infants generally exhibit functional immaturity which is more pronounced the greater the degree of prematurity. This immaturity manifests itself in a number of ways. For example, the premature infant is likely to have an immature gastro-intestinal tract, in particular as regards capability to absorb nutrients and the development and effectiveness of the gut barrier function.

Various techniques have been proposed to improve gut barrier function or gastrointestinal health in preterm infants. For example, in US 6132710, purified Lactobacillus salivarius and Lactobacillus plantarum strains are administered to preterm infants to prevent injury caused by infection and inflammation to mucosal tissue, especially by nasogastric administration to prevent gastrointestinal tissue injury and reduce the risk of neonatal necrotizing enterocolitis.

Also US-A-5411751 describes food products for infants reducing gastrointestinal irritation, especially for infants of low birth weight.

Moreover, the premature infant may also suffer from a restricted ability to metabolise some amino acids such as phenylalanine which can result in severe amino acid imbalances if the protein intake exceeds the degradative capacity. On the other hand, the availability of an essential amino acid may be a limiting factor for protein synthesis and therefore for growth. Indeed, in the premature infant, some amino acids such as tyrosine and cysteine which are not essential for a term infant may become essential.

Recent advances in medical science have enabled infants born ever more prematurely to have a chance of survival. Nowadays, the minimum weight at birth for survival to be possible is thought to be between 500 and 600g. Such infants face particular problems linked both to their low weight and to their degree of immaturity.

If these very low birth weight infants had remained in the womb for the normal period of a human pregnancy, in addition to achieving a normal physiological development, they would at the same time have grown rapidly in size. It would be desirable to provide nutrition to such infants tailored to assist them to achieve a similar rate of growth to that they would have achieved in utero. However, the need to avoid straining the ability of the immature metabolism and excretory functions by overloading them makes the selection of protein quality and quantity of considerable importance in the design of infant formulas for very low birth weight babies.

### Summary of the Invention

The present invention provides a nutritional composition for very low birth weight infants which comprises 26 to 38 g/l of a source of hypoallergenic hydrolysed whey protein with a degree of hydrolysis between 8 and 20, 37 to 46 g/l of a fat source of which 20 to 50% is medium chain triglycerides and which has an n6:n3 ratio between 6 and 12 and 50 to 100 g/l of a carbohydrate source, which composition contains between 3.2 and 4.0 grams of protein per 100kcal.

The invention extends to the use of a hypoallergenic hydrolysed whey protein source with a degree of hydrolysis between 8 and 20 in an amount corresponding to a protein content of from 3.2 to 4.0 grams of protein per 100kcal in the manufacture of a nutritional composition or medicament for promoting growth in very low birth weight infants.

The invention further extends to a method of promoting growth in a very low birth weight infant in need thereof by administering to the infant a therapeutic amount of a nutritional composition comprising a hypoallergenic hydrolysed whey protein source with a degree of hydrolysis between 8 and 20 in an amount corresponding to a protein content of from 3.2 to 4.0 grams of protein per 100kcal.

### Detailed Description of the Invention

In this specification, the following terms have the following meanings:-
"very low birth weight infant" or "VLBW infant" means an infant with a birth weight below 1500g.
"degree of hydrolysis" (DH) means the percentage of nitrogen in the form of free alpha-amino nitrogen as compared to total nitrogen as measured by the TNBS method described by Adler-Nissen et al. in "Determination of the Degree of Hydrolysis of Food Protein Hydrolysates by Trinitrobenzenesulfonic acid" (J. Agric. Food Chem., 1979, vol.27, n°6, pp1256-1262). It is a measure of the extent to which a protein has been hydrolysed.
"promoting growth in a VLBW infant" means assisting the VLBW infant to achieve a rate of growth comparable to that exhibited by a foetus of the same gestational age in utero.

All references to percentages are percentages by weight unless otherwise stated.

References to the content of specific nutrients in grams per litre refer to a nutritional composition ready for consumption. In the case of powdered products, this refers to the powder made up according to the instructions.

The nutritional composition of the invention comprises a source of hypoallergenic hydrolysed whey protein with a DH between 8 and 20, more preferably between 9 and 16. A particularly preferred degree of hydrolysis is 14. The whey protein may be hydrolysed in any suitable manner known in the art, for example as described in European Patent No. 322,589. If the whey fraction used as the starting material is substantially lactose free, it is found that the protein suffers much less lysine blockage during the hydrolysis and subsequent thermal processing. This enables the extent of lysine blockage to be reduced from about 15% by weight of total lysine to less than about 10% by weight of lysine; for example about 7% by weight of lysine blockage which greatly improves the nutritional quality of the protein source. The source of the whey protein may be acid whey, sweet whey, whey protein isolate or mixtures thereof. Preferably, however, the protein source is based on whey protein isolate or modified sweet whey. Sweet whey is a readily available by-product of cheese making and is frequently used in the manufacture of infant formulas based on cows' milk. However, sweet whey includes a component which is undesirably rich in threonine and poor in tryptophan called caseino-glyco-macropeptide (CGMP). Removal of the CGMP from sweet whey results in a protein with a threonine content closer to that of human milk. This modified sweet whey can then be supplemented with those amino acids in respect of which it has a low content (principally histidine and arginine). A process for removing CGMP from sweet whey is described in EP 880902.

If modified sweet whey or whey protein isolate is used as the protein source, it is preferably supplemented by free arginine in an amount of from 0.1 to 2% by weight of the protein and/or free histidine in an amount of from 0.1 to 3% by weight of the protein.

An example of a suitable amino acid profile for a nutritional composition of the present invention is given below:-

| Amino acid (g / 100g of protein) | Amount |
|---|---|
| Isoleucine | 5.1 |
| Leucine | 12.1 |
| Lysine | 9.1 |
| Methionine | 2.2 |
| Cystine | 2.6 |
| Phenylalanine | 3.7 |
| Tyrosine | 3.1 |
| Threonine | 5.6 |
| Tryptophan | 2.1 |
| Valine | 5.2 |
| Arginine | 3.5 |
| Histidine | 3.6 |
| Alanine | 5.0 |
| Aspartic acid | 11.0 |
| Glutamic acid | 15.8 |
| Glycine | 2.2 |
| Proline | 4.6 |
| Serine | 4.8 |

The nutritional composition of the present invention contains from 3.2 to 4.0 grams of hypoallergenic hydrolysed whey protein per 100 kcal, more preferably from 3.4 to 3.7 g/100 kcal. A particularly preferred protein content is 3.6 g/100kcal.

The nutritional composition of the present invention contains from 37 to 46 g/l of a fat source of which 20 to 50% is medium chain triglycerides. Preferably the fat content is from 39 to 43 g/l. Preferably the MCT content is between 25 and 45%. The lipids making up the fat source may be any suitable fat or fat mixture. Vegetable fats are particularly suitable; for example soy oil, palm oil, coconut oil, safflower oil, sunflower oil, corn oil, canola oil, and the like. Fractionated coconut oil is a suitable source of MCTs.

However, a major difference between human milk fat and these triglycerides of vegetable origin is that most triglycerides of vegetable origin have unsaturated fatty acid residues in the Sn2 position whereas the residue most commonly found in the Sn2 position in human milk triglycerides is that of the saturated fat palmitic acid. It has been shown that fatty acid residues are better absorbed from the Sn2 position and that this is particularly important for the absorption of palmitic acid by pre-tenn infants. Therefore, it is preferable to include in the fat source from 5 to 20% of a structured lipid in which the triglycerides have been subjected to enzymatic or other re-esterification such that the palmitic acid residues are mostly present in the Sn2 position. One example of a suitable structured lipid is that sold under the trade mark Betapol ® by Lipid Nutrition, a subsidiary of Loders Croklaan. Preferably at least 40% of the palmitic acid residues in the fat source are in the Sn2 position, more preferably between 45 and 55%.

The n6:n3 ratio of the fat source used in the composition of the present invention is between 6 and 12, more preferably between 7 and 10. A particularly preferred n6:n3 ratio is 9:1. If desired, the fat blend can be supplemented with long chain polyunsaturated fatty acids, preferably those isolated from fungal and algal biomass such as the arachidonic and docosahexaenoic acids sold by Martek Inc under the trade marks Arasco ® and Dhasco ® respectively, up to a total amount of 3% of the fat source. Preferably the ratio of arachidonic acid to docosahexaenoic acid is about 2:1.

The nutritional composition contains 50 to 100 g/l preferably 70 to 90 g/l of a source of carbohydrate. Any suitable carbohydrates may be used, for example lactose, corn syrup solids, maltodextrins, and mixtures thereof. Mixtures of lactose and maltodextrin are preferred, preferably in the range from 20% lactose:80% maltodextrin to 60% lactose:40% maltodextrin. A particularly preferred mixture is 40% lactose: 60% maltodextrin.

Suitable vitamins and minerals may be included in the nutritional composition in an amount to meet the appropriate guidelines with particular attention to the content of sodium, potassium, chloride, calcium, phosphorus, iron, selenium, zinc, vitamin A and vitamin E. For example, the composition may contain, per 100kcal, 50 to 70 mg sodium (preferably 55 to 65 mg), 120 to 150 mg potassium (preferably 130 to 140 mg), 80 to 110 mg chloride (preferably 90 to 100 mg), 130 to 170 mg calcium (preferably 140 to 160 mg), 80 to 105 mg phosphorus (preferably 85 to 95 mg), 1.6 to 2.5 mg iron (preferably 1.7 to 2.0 mg), 2.0 to 6.0 µg selenium (preferably 3.0 to 5.0 µg ), 1.1 to 1.6 mg zinc (preferably 1.4 to 1.6 mg), 800 to 1200 IU vitamin A (preferably 900 to 1100 IU) and 3 to 9 IU vitamin E (preferably 5 to 7 IU).

The nutritional composition may also contain nucleotides in the following quantities per 100 kcal:- UMP 1.0 - 4.0 mg, CMP 1.5 - 5.5 mg AMP 0.3 - 1.5 mg and GMP 0.1 - 0.5 mg.

The nutritional composition may be prepared in any suitable manner. For example, it may be prepared by blending together the hydrolysed whey protein, the carbohydrate source, and the fat source in appropriate proportions. If used, the emulsifiers may be included at this point. The vitamins and minerals may be added at this point but are usually added later to avoid thermal degradation. Any lipophilic vitamins, emulsifiers and the like may be dissolved into the fat source prior to blending. Water, preferably water which has been subjected to reverse osmosis, may then be mixed in to form a liquid mixture. The temperature of the water is conveniently about 50°C to about 80°C to aid dispersal of the ingredients. Commercially available liquefiers may be used to form the liquid mixture. The liquid mixture is then homogenised; for example in two stages.

The liquid mixture may then be thermally treated to reduce bacterial loads, by rapidly heating the liquid mixture to a temperature in the range of about 80°C to about 150°C for about 5 seconds to about 5 minutes, for example. This may be carried out by steam injection, autoclave or by heat exchanger; for example a plate heat exchanger.

Then, the liquid mixture may be cooled to about 60°C to about 85°C; for example by flash cooling. The liquid mixture may then be again homogenised; for example in two stages at about 10 MPa to about 30 MPa in the first stage and about 2 MPa to about 10 MPa in the second stage. The homogenised mixture may then be further cooled to add any heat sensitive components; such as vitamins and minerals. The pH and solids content of the homogenised mixture are conveniently adjusted at this point.

If it is desired to produce a powdered nutritional composition, the homogenised mixture is transferred to a suitable drying apparatus such as a spray drier or freeze drier and converted to powder. The powder should have a moisture content of less than about 5% by weight.

If it is desired to produce a liquid composition, the homogenised mixture is preferably aseptically filled into suitable containers by pre-heating the homogenised mixture (for example to about 75 to 85°C) and then injecting steam into the homogenised mixture to raise the temperature to about 140 to 160°C; for example at about 150°C. The homogenised mixture may then be cooled, for example by flash cooling, to a temperature of about 75 to 85°C. The mixture may then be homogenised again, further cooled to about room temperature and filled into containers. Suitable apparatus for carrying out aseptic filling of this nature is commercially available. The liquid composition may be in the form of a ready to feed composition having a solids content of about 10 to about 14% by weight or may be in the fonn of a concentrate; usually of solids content of about 20 to about 26% by weight.

In another aspect, this invention provides a method of promoting growth in a VLBW infant in need thereof by administering to the infant a therapeutic amount of a nutritional composition comprising a hypo-allergenic whey protein source with a degree of hydrolysis between 8 and 20 in an amount corresponding to a protein content of from 3.2 to 4.0 grams of protein per 100kcal.

Protein requirements are not well defined in pretenn infants. The American Academy of Pediatrics recommends a protein intake of 2.9 to 3.3 g/100 kcal [AAPCON, 2003], while The European Society of Paediatric Gastroenterology and Nutrition recommends an intake of 2.2-3.1 g/100 kcals [ESPGAN-CON, 1987a]. Yet, recommended dietary protein intakes (RDPI) relate to infants ≥ 26 weeks gestation and ≥ 800 g and not to less mature or smaller infants whose requirements may be greater. RDPI are also based on needs for normal growth but no provision is made for the infant to achieve a comparable rate of growth to that which would have occurred in utero which may be a critical consideration in these infants. In effect, RDPI may systematically underestimate 'true' protein needs in these high-risk VLBW infants.

The amount of the nutritional composition to be administered will vary depending upon the state of maturation or growth of the infant but, on the assumption that it is the sole source of nutrition of the infant, may be fed either on demand or, if the infant is unable to control intake itself, in accordance with the expectations of healthcare professionals expert in the care of VLBW infants.

The invention will now be further illustrated by reference to the following examples:-

### Example 1

An example of a nutritional composition according to the present invention is as follows:-

| | |
|---|---|
| Cal.density (kcal/100 ml) | 80 |
| **Protein g/100 kcal** | **3.6** |
| Protein | Hypoallergenic hydrolysed whey protein DH 14 |
| | 1.4% (of protein) free arginine |
| | 1.9% (of protein) free histidine |
| | |
| **Fat g/100 kcal** | **5.2** |
| of which: | |
| MCT | 40% |
| interesterified palm oil | 11 % (56% palmitic acid at Sn2 position) |
| ARA | 0.6% |
| DHA | 0.3% |
| n6:n3 | 8.2:1 |
| ARA :DHA | 2:1 |
| | |
| **Carbohydrates g/100 kcal** | **9.9** |
| Lactose / Maltodextrin | 40/60 |
| | |
| **Electrolytes.& Minerals per 100 kcal** | |
| Na (mg) | 64 |
| K (mg) | 136 |
| Cl (mg) | 95 |
| Ca (mg) | 150 |
| P (mg) | 88 |
| Ca/P | 1.7 |
| Mg (mg) | 10 |
| Mn (µg) | 7.0 |
| | |
| **Vitamins & trace elements per 100 kcal** | |
| A (IU) | 1000 |
| D (IU) | 150 |
| E (IU) | 6.0 |
| K1 (µg) | 8.0 |
| C (mg) | 30 |
| B1 (mg) | 0.2 |
| B2 (mg) | 0.3 |
| Niacin (mg) | 4.0 |
| B6 (mg) | 0.2 |
| Folic acid (µg) | 70 |
| Pantethenic acid (mg) | 1.4 |
| B12 (µg) | 0.25 |
| Biotin (µg) | 5.0 |
| Choline (mg) | 15 |
| Inositol (mg) | 6.5 |
| Taurine (mg) | 8.0 |
| Carnitine (mg) | 2.0 |
| Fe (mg) | 1.8 |
| I (µg) | 35 |
| Cu (mg) | 0.15 |
| Zn (mg) | 1.5 |
| Se (µg) | 4.0 |
| | |
| **Nucleotides per 100 kcal** | |
| UMP (mg) | 3.0 |
| CMP (mg) | 4.6 |
| AMP (mg) | 0.5 |
| GMP (mg) | 0.3 |

### Example 2

This example compares the effect of a nutritional composition according to the present invention used as the sole source of nutrition for a group of preterm infants with the effect of a control nutritional composition on protein utilisation, metabolic status and growth. The compositions of the formulas are given in the table below:-

**TABLE 1. COMPOSITION OF STUDY FORMULAS (/100 kcal)***

| Formula | Control | Experimental |
|---|---|---|
| Caloric density (kcal/100 ml) | 80 | 80 |
| Protein (g) | 3.0 | 3.6 |
| Protein quality | hydrolysed whey protein | |
| Fat (g) | 5.2 | 5.2 |
| MCT (%) | 25 | 30 |
| Carbohydrates (g) | 10.5 | 9.9 |
| Lactose/Maltodextrin | 40/60 | 20/80 |
| Minerals | | |
| Sodium (mg) | 55 | 64 |
| Potassium (mg) | 120 | 136 |
| Chloride (mg) | 85 | 95 |
| Calcium (mg) | 131 | 131 |
| Phosphorus (mg) | 75 | 75 |
| Iron (mg) | 1.5 | 0 |
| Copper (mg) | 0.1 | 0.1 |
| Zinc (mg) | 1.2 | 1.2 |

The formulas differed primarily with respect to protein content (3.0 v 3.6 g/100k cal). Other differences were noted in carbohydrate (10.5 v 9.9 g), electrolytes (see above) vitamin A (350 v 500 IU), and iron (1.5 mg v 0) content.

The study was prospective, double blind, randomised, and cross-over in nature with each infant being fed both formulas. The sequence of formula feeding was predetermined in a balanced random fashion. Infants randomised to sequence A were fed the experimental protein formula first, the control protein formula second. Infants randomised to sequence B were fed the control protein formula first, the experimental protein formula second.

Infants were recruited from two centres; the Special Care Baby Unit, Royal Victoria Infirmary, Newcastle upon Tyne, UK and Service Universitaire de Neonatologie Liege, Liege, Belgium. The study was approved by the local Ethics Committee at each site. Written informed consent was obtained from the parent/guardian(s).

Preterm infants (≤ 1500 g, gestation ≤ 32 weeks) were considered eligible in the study. Gestation was determined using maternal dates and intrauterine ultrasound. Only those who were clinically stable and had established a full enteral intake (≥ 130 mls/kg/d) were enrolled. Infants requiring oxygen therapy were considered eligible but were removed if oxygen therapy was required when the first nutrient balance was due. Infants receiving diuretics or steroids were not enrolled in the study.

When an eligible infant was identified the responsible physician was approached.
The guardian(s) were then approached, the study explained, and a written outline provided. After written informed consent was obtained the infant was enrolled.
Baseline anthropometric and biochemical investigations were then obtained and the infant was randomised to one of two study sequences.

During the first balance infants were generally fed by continuous nasogastric infusion. During the second balance, infants were fed by bolus infusion or orally to appetite.

Each sequence was designed to last one week. When an enteral intake of ≥ 135 mls/kg/d of the first study formula was tolerated for ≥ 48 hours anthropometry was performed, a sample of blood was drawn and the first balance was started. At the end of the first balance, anthropometry was repeated and a second blood sample obtained. The second study formula was then fed and the process repeated. When the second balance was finished the study ended.

During the first balance study nutrient intake of study formula was measured daily and maintained at 135-150 mls/kg/d. During the second balance this was not always possible because some infants were fed to appetite. Body weight, serum urea, serum electrolytes, blood pH, and base excess were measured at the beginning of the study, the end of the first balance and the end of the second balance collection. Retinol binding protein (RBP) and serum transferrin concentrations were measured at the end of each balance.

Blood sampling was performed each a.m. and timed to coincide with the end of each feeding cycle (continuous feeds) or immediately before feeds. Blood gas analysis was performed immediately. Plasma was also separated immediately. One aliquot was dispatched to main laboratory for electrolyte, urea nitrogen, total protein, and albumin analyses. The second aliquot was stored at -30° C and dispatched later for RBP and transferrin analyses.

Anthropometry was performed as previously described [Cooke, 1988a].
Electrolytes, urea nitrogen, total protein and albumin were analysed using routine laboratory methodology. Transferrin was measured by immunoturbidimetry using the Tina-quant transferrin Kit (Roche N° 1 931 628, Switzerland) [Kreutzer, 1976; Lievens, 1994]. RBP was measured by immunoturbidimetry using a rabbit anti-human retinol-binding protein [Gulamali, 1985] with N Protein Standard SL (human) used as the calibrator (Dade Behring, Germany). Determinations were made using a BM/Hitachi 917 Analyser (Roche, Switzerland).

Nutrient balance collections were performed as previously described [Cooke, 1988a]. Bottles of formula were weighed before and after each feed; differences in weights were used to calculate formula intake. Bottles were also fed to completion; differences in weight between the full and empty bottles were used a cross-check for the accuracy of cumulative weights between feeds. Spillage was collected on pre-weighed diapers placed around the infant; differences in weight between the clean and 'soiled' diapers was used to calculate losses.

Urine and stool (girls) and stool (boys) were collected in a Pyrex dish placed underneath the infants. Urine in boys was collected via a urine collection bag. Urine, faeces and formula were analysed for nutrient content at the Samuel J Fomon Infant Nutrition Unit, University of Iowa, Iowa, USA and Service Universitaire de Neonatologie Liege, Liege, Belgium. Nitrogen was determined by micro-Kjeldahl digestion followed by a modified microdiffusion analysis [Fomon, 1973].

Calcium, magnesium, iron, copper and zinc content was performed by atomic absorption spectrophotometry (Perkin-Elmer model 560). Fat was determined by a modification of the method of Van de Kamer et al [Van de Kamer, 1949], phosphorus using phosphomolybdate method as described by Leloir and Cardini [Leloir, 1957].

Volume of intake was calculated by dividing differences in weight by specific gravity of the formula. Nutrient intake was calculated from the volume fed and content of the formula. Stool excretion was calculated from the weight and content of the stool, urine excretion from the volume and content of the urine. Absorption was calculated by subtracting stool output from intake, retention by subtracting urinary excretion from absorption.

During the balance collections, care of the study infant was provided by nurses responsible only for the study infant. These nurses are specially trained in care of the preterm infant and the performance of nutrient balance collections. The overall care of the infants was under the direction of the responsible physician.
All regular nursing procedures will performed as indicated.

Sample size determination was related to nitrogen retention and based on a standard deviation of 20 mg/kg/d, a significant difference of 30 mg/kg/d, power = .80, and alpha = 0.05. Allowing for centre-to-centre variation it was estimated that 16 infants would be required to complete the study.

Data were analysed on an intention to treat basis using ANOVA. Results were considered significant at p <.05.

Eighteen infants (girls = 9, boys = 9) were studied. Mean (± SD) birthweight and gestational age were 1226 ± 204 g and 29.5 ±1.5 weeks. No infants received supplemental oxygen or medications during the study. Nine infants were fed the experimental formula and 9 infants the control formula first.

At study entry, postnatal age (18 ± 8 < 25 ± 9 d; p <.05) but not corrected age (229 ± 5 v 229 ± 6 d), body weight (1473 ± 262 v 1470 ± 197 g), crown-heel length (40 ± 2.7 v 40 ± 1.7 cms) or occipito-frontal circumference (29 ± 2.2 v 29 ± 1.6 cms) differed between infants fed the experimental formula and those fed the control formula first.

Thirty-six balances were performed in 18 infants. Nitrogen absorption and retention were a linear function of intake. Intake (743 ± 71 > 604 ± 35 mg/kg/d, p <.001), absorption (624 ± 84 > 500 ± 49, p <.001) and retention (514 ± 85 > 426 ± 45, p < .001) were greater with the experimental protein formula. No differences were detected in % absorption (83 ± 6 v 84 ± 6) or % retention (71 ± 6 v 70 ± 6) between the formulas.

The remaining balance results are presented in Table 2 below. Fat intake was similar but faecal excretion was less, while absorption was greater with the experimental formula (p <.05). Although minor differences were detected in magnesium and zinc intake no differences were noted in calcium, phosphorus, magnesium or zinc balance between the formulas. However, copper intake and absorption were greater with the control formula (p <.05).

No differences were detected in postnatal age when the blood samples were drawn (33 ± 10 v 31 ± 7 d for the experimental and control fonnulas). No infants developed uraemia (urea ≥ 7 .0 mmol) or metabolic acidosis (base deficit ≥ - 8.0) [Schwartz, 1979] but serum urea was greater with the experimental formula (3.5 ± 1.3 > 2.1 ± 0.8 mmol, p < .001). No differences were noted in blood pH (7.38 ± .04 v 7.37 ± .04), or base excess (-1.2 ± 1.7 v -1.4 ± 2.1 mmol/L) between the formulas.

No differences were detected creatinine (44 ± 5 v 46 ± 12), total protein (44 ± 3 v 45 ± 3 g/L), albumen (31 ± 3 v 31 ± 3 g/L), or transferrin (20 ± 3 v 21 ± 4) but RBP was greater with the experimental formula (12.4 ± 3.3 > 11.0 ± 2.6; p < .05). Weight gain was also greater (mean differences = 11 ± 12 g/d; p < .05), an effect which was more marked in boys than girls.

Consensus recommendations on protein intakes for infants weighing < 1000 g at birth are - 3.0 g/100 kcals. However, these recommendations assume that tissue increment for growth is - 2.3 g/kg/d. Recent data suggest that tissue requirements are closer to 2.5 g/kg/d. Assuming that obligatory protein losses in the urine and skin [Snyderman, 1969] are 1.0 g/kg/d and a fractional absorption rate of 90 % then requirements may be closer to 3.6 g/100 kcals.

**Table 2**

| | Formula | Intake | Absorption | % Absorption | Retention | % Retention |
|---|---|---|---|---|---|---|
| Fat | 3.6 g | 6.6 ± 0.6 | 5.1 ± 0.8 | 77 ± 9 | | |
| (g/kg/d) | 3.0 g | 6.6 ± 0.4 | 4.8 ± 0.7* | 73 ± 11* | | |
| Calcium | 3.6 g | 181 ± 17 | 85 ± 32 | 46 ± 17 | 83 ± 32 | 46 ± 14 |
| (mg/kg/d) | 3.0 g | 181 ± 12 | 82 ± 36 | 45 ± 19 | 81 ± 35 | 45 ± 19 |
| Phosphorus | 3.6 g | 101 ± 10 | 88 ± 10 | 87 ± 5.2 | 71 ± 13 | 70 ± 11 |
| (mg/kg/d) | 3.0 g | 103 ± 6 | 91 ± 7.1 | 89 ± 4.2 | 66 ± 11 | 64 ± 10 |
| Magnesium | 3.6 g | 12.6 ± 1.2 | 6.0 ± 2.1 | 48 ± 15 | 5.6 ± 2.0 | 45 ± 12 |
| (mg/kg/d) | 3.0 g | 11.1 ± 0.8* | 5.3 ± 1.7 | 48 ± 15 | 5.0 ± 1.8 | 45 ± 15 |
| Zinc | 3.6 g | 1819 ± 175 | 574 ± 358 | 31 ± 18 | 556 ± 354 | 31 ± 15 |
| (µg/kg/d) | 3.0 g | 1964 ± 137* | 563 ± 361 | 28 ± 18 | 544 ± 370 | 28 ± 18 |
| Copper | 3.6 g | 166 ± 16 | 43 ± 49 | 25 ± 29 | | |
| (µg/kg/d) | 3.0 g | 205 ± 18* | 83 ± 41* | 40 ± 19* | | |

Current recommendations are related to needs for normal growth but it takes time to establish RDPI's in the sick unstable preterm infant. Infants, therefore, accrue a nutrient deficit, the more immature the infant the greater the deficit. In this study, the mean protein deficit at the beginning of the study was - 10 g/kg further increasing requirements in these high-risk infants.

In this study, as protein intake increased from 3.4 to 5.2 g/kg/d so did absorption and retention. No infants became uraemic or developed a metabolic acidosis and no differences were detected in acid-base status between the experimental and control formulas. At the same time, growth was better suggesting that the experimental formula better met needs in these high-risk infants.

The findings of this study are important. Concern exists about the potential adverse effects of higher levels of dietary protein intake. Recent recommendations have suggested an upper limit of 4 to 4.5 g/kg/d. Data from this study shows that an intake of up to 5.2 g/kg/d protein is not only well tolerated but also is associated with better growth.

## Claims

1. A nutritional composition for VLBW infants with a birth weight below 1500 g which comprises 26 to 38 g/l of a source of hypoallergenic hydrolysed whey protein with a degree of hydrolysis between 8 and 20, 37 to 46 g/l of a fat source of which 20 to 50% is medium chain triglycerides and which has an n6:n3 ratio between 6 and 12 and 50 to 100 g/l of a carbohydrate source, which composition contains between 3.2 and 4.0 grams of protein per 100kcal.

2. The composition of claim 1, wherein the degree of hydrolysis is between 9 and 16.

3. The composition of Claim 1 or 2, wherein the source of whey protein is sweet whey from which the caseino-glyco-macropeptide has been removed or whey protein isolate.

4. The composition of Claim 3, which additionally includes free arginine in an amount of from 0.1 to 2.0 % by weight of protein and/or free histidine in an amount of from 0.1 to 3 % by weight of protein.

5. The composition of any preceding claim, which comprises from 3.4 to 3.7 grams of protein per 100 kcal.

6. The composition of any preceding claim, wherein the fat source comprises from 25 to 45% medium chain triglycerides.

7. The composition of any preceding claim, wherein the fat source comprises from 5 to 20% of a structured lipid in which at least 50% of the palmitic acid residues contained in the structured lipid are esterified at the Sn2 position.

8. The use of a hypoallergenic hydrolysed whey protein source with a degree of hydrolysis between 8 and 20 in an amount corresponding to a protein content of from 3.2 to 4.0 grams of protein per 100kcal in the manufacture of a nutritional composition or medicament for promoting growth in VLBW infants with a birth weight below 1500 g.

9. The use of Claim 8, wherein the degree of hydrolysis is between 9 and 16.

10. The use of Claim 8 or 9, wherein the source of whey protein is sweet whey from which the caseino-glyco-macropeptide has been removed or whey protein isolate.

11. The use of Claim 10, wherein the composition additionally includes free arginine in an amount of from 0.1 to 2 % by weight of protein and/or free histidine in an amount of from 0.1 to 3 % by weight of protein.

12. The use of any of claims 8 to 11, wherein the protein content of the nutritional composition is from 3.4 to 3.7 g/100 kcal.

## Patentansprüche

1. Nahrungszusammensetzung für VLBW Säuglinge mit einem Geburtsgewicht unter 1500 g, die 26 bis 38 g/l einer Quelle für ein hypoallergenes, hydrolysiertes Molkeprotein mit einem Hydrolysegrad zwischen 8 und 20, 37 bis 46 g/l einer Fettquelle, von der 20 bis 50 % mittelkettige Triglyceride sind und die ein n6:n3 Verhältnis zwischen 6 und 12 hat, und die 50 bis 100 g/l einer Kohlenhydratquelle aufweist, wobei die Zusammensetzung zwischen 3,2 und 4,0 Gramm Protein pro 100 kcal enthält.

2. Zusammensetzung nach Anspruch 1, wobei der Hydrolysegrad zwischen 9 und 16 liegt.

3. Zusammensetzung nach Anspruch 1 oder 2, wobei die Quelle für das Molkeprotein Süßmolke, von der das Caseino-Glyco-Makropeptid entfernt wurde, oder Molkeprotein-Isolat ist.

4. Zusammensetzung nach Anspruch 3, die zusätzlich freies Arginin in einer Menge von 0,1 bis 2,0 Proteingewichts-% und/oder freies Histidin in einer Menge von 0,1 bis 3 Proteingewichts-% enthält.

5. Zusammensetzung nach irgendeinem der vorstehenden Ansprüche, die 3,4 bis 3,7 Gramm Protein pro 100 kcal aufweist.

6. Zusammensetzung nach einem der vorstehenden Ansprüche, wobei die Fettquelle 25 bis 45 % mittelkettige Triglyceride aufweist.

7. Zusammensetzung nach einem der vorstehenden Ansprüche, wobei die Fettquelle 5 bis 20 % eines strukturierten Lipids aufweist, in dem zumindest 50% der Palmitinsäurereste, die in dem strukturierten Lipid enthalten sind, an der Sn2-Position verestert sind.

8. Verwendung einer hypoallergenen, hydrolysierten Molkeproteinquelle mit einem Hydrolysegrad zwischen 8 und 20 in einer Menge, die einem Proteingehalt von 3,2 bis 4,0 Gramm Protein pro 100 kcal entspricht, zur Herstellung einer Nahrungszusammensetzung oder eines Medikaments zur Förderung des Wachstums bei VLBW Säuglingen mit einem Geburtsgewicht unter 1500 g.

9. Verwendung nach Anspruch 8, wobei der Hydrolysegrad zwischen 9 und 16 liegt.

10. Verwendung nach Anspruch 8 oder 9, wobei die Quelle für das Molkeprotein Süßmolke, von der das Caseino-Glyco-Makropeptid entfernt wurde, oder Molkeprotein-Isolat ist.

11. Verwendung nach Anspruch 10, wobei die Zusammensetzung zusätzlich freies Arginin in einer Menge von 0,1 bis 2 Proteingewichts-% und/oder freies Histidin in einer Menge von 0,1 bis 3 Proteingewichts-% enthält.

12. Verwendung nach irgendeinem der Ansprüche 8 bis 11, wobei der Proteingehalt der Nahrungszusammensetzung von 3,4 bis 3,7 g/100 kcal ist.

## Revendications

1. Composition nutritionnelle pour des nouveau-nés de très faible poids de naissance avec un poids à la naissance inférieur à 1500 g, qui comprend 26 à 38 g/l d'une source de protéines de lactosérum hydrolysées hypoallergénique avec un degré d'hydrolyse entre 8 et 20, 37 à 46 g/l d'une source de matière grasse dont 20 à 50 % sont des triglycérides à chaîne moyenne et qui a un rapport n6:n3 entre 6 et 12, et 50 à 100 g/l d'une source de glucides, laquelle composition contient entre 3,2 et 4,0 g de protéines par 100 kcal.

2. Composition de la revendication 1, dans laquelle le degré d'hydrolyse est compris entre 9 et 16.

3. Composition de la revendication 1 ou 2, dans laquelle la source de protéines de lactosérum est un lactosérum doux à partir duquel le caséino-glyco-macropeptide a été extrait ou un isolat de protéine de lactosérum.

4. Composition de la revendication 3, qui comporte en plus de l'arginine libre en une proportion allant de 0,1 à 2,0 % en poids de protéines et/ou de l'histidine libre en une proportion allant de 0,1 à 3 % en poids de protéines.

5. Composition de l'une des revendications précédentes, qui comprend de 3,4 à 3,7 g de protéines par 100 kcal.

6. Composition de l'une des revendications précédentes, dans laquelle la source de matière grasse comprend 25 à 45 % de triglycérides à chaîne moyenne.

7. Composition de l'une des revendications précédentes, dans laquelle la source de matière grasse comprend de 5 à 20 % d'un lipide structuré dans lequel au moins 50 % des résidus d'acide palmitique contenus dans le lipide structuré sont estérifiés à la position Sn2.

8. Utilisation d'une source de protéines de lactosérum hydrolysées hypoallergénique avec un degré d'hydrolyse entre 8 et 20 en une proportion correspondant à une teneur en protéines allant de 3,2 à 4,0 g de protéines par 100 kcal dans la fabrication d'une composition nutritionnelle ou d'un médicament pour favoriser la croissance chez les nouveau-nés à très faible poids de naissance avec un poids de naissance inférieur à 1500 g.

9. Utilisation de la revendication 8, dans laquelle le degré d'hydrolyse est compris entre 9 et 16.

10. Utilisation de la revendication 8 ou 9, dans laquelle la source de protéines de lactosérum est un lactosérum doux à partir duquel le caséino-glyco-macropeptide a été extrait ou un isolat de protéine de lactosérum.

11. Utilisation de la revendication 10, dans laquelle la composition comporte en plus de l'arginine libre en une proportion allant de 0,1 à 2 % en poids de protéines et/ou de l'histidine libre en une proportion allant de 0,1 à 3 % en poids de protéines.

12. Utilisation de l'une des revendications 8 à 11, dans laquelle la teneur en protéines de la composition nutritionnelle est de 3,4 à 3,7 g/100 kcal.
